# EUROPÄISCHE PATENTSCHRIFT

(11) **EP 2 035 802 B1**
(45) Veröffentlichungstag und Bekanntmachung des Hinweises auf die Patenterteilung: **29.02.2012**
(21) Anmeldenummer: 07764414.4
(22) Anmeldetag: 28.06.2007
(51) Int. Cl.: G01M 17/10, F16C 19/52, B61F 15/20, B61K 9/04

(54) **SENSOREINHEIT FÜR EIN RADSATZLAGER**
SENSOR UNIT FOR A WHEELSET BEARING
BOÎTIER DE DÉTECTION POUR UN PALIER D'ESSIEUX MONTÉS

(30) Priorität: 30.06.2006 DE 102006030312
(43) Veröffentlichungstag der Anmeldung: 18.03.2009
(73) Patentinhaber: Schaeffler Technologies GmbH & Co. KG, 91074 Herzogenaurach (DE)
(72) Erfinder: STITZINGER, Rupert, 91522 Ansbach (DE)
(86) Internationale Anmeldenummer: PCT/DE2007/001161
(87) Internationale Veröffentlichungsnummer: WO 2008/000250

(56) Entgegenhaltungen:
- WO-A-98/11356
- WO-A-2004/106878
- DE-A1- 10 136 438
- DE-A1-102004 054 201

## Beschreibung

### Gebiet der Erfindung

Die Erfindung betrifft eine Sensoreinheit für ein Radsatzlager, wie es insbesondere bei Schienenfahrzeugen Verwendung findet. Derartige Radsatzlager werden zunehmend mit Sensoreinheiten, auch als Aufnehmereinheiten bezeichnet, ausgestattet.

Die Anforderungen an Radsatzlager hinsichtlich hoher Geschwindigkeit und Sicherheit sind insbesondere bei Schienenfahrzeugen deutlich gestiegen. Mit Hilfe von Sensoren werden verschiedene Kenngrößen, wie Temperatur und Drehzahl unmittelbar am Radsatzlager erfasst.

Aus der DE 20 2005 015 006 U1 ist es bekannt, die Temperatur im Radsatzlager von vorbeifahrenden Schienenfahrzeugen mit einer IR-Empfangseinheit unterhalb des Schienenstranges zu überwachen. Die dabei ermittelten Werte werden mit in einem Rechner gespeicherten Infrarotsignalmustern verglichen. Bei unzulässigen Abweichungen wird ein Alarmsignal abgegeben. Mit dieser Lösung lassen sich nur die Momentanwerte der Sensoren von außen ermitteln, sodass von außen keine weiterführende Bewertung des Temperaturverlaufes über eine bestimmte Zeit möglich ist.

Aus der DE 20 2005 005 278 U1 ist eine Vorrichtung zur Überwachung der Radsatzlagertemperatur an Schienenfahrzeugen zur Vermeidung von Heißläuferentgleisungen bekannt. Über einen Datenlogger verbundene Sensoren im Inneren des Radsatzlagers sind über ein Funkmodem per GSM/GSM-R-Netz mit einem Triebfahrzeug verbunden. Überschreitet die Achslagertemperatur einen Grenzwert, so wird dies im Triebfahrzeug oder auch dem Triebfahrzeugführer oder der Betriebsleitung angezeigt. Nachteilig an dieser Lösung ist der hohe Aufwand für die Übertragung der Daten. Ein weiterer Nachteil besteht darin, dass die aufgezeichneten Daten nur in der Steue-rungseinheit des Triebfahrzeuges oder der Betriebsleitung vorliegen. Befindet sich das Fahrzeug oder auch nur das Radsatzlager in der Wartung, so ist ein Zugriff auf die Daten nur umständlich oder gar nicht möglich.

Desweiteren zeigt die WO2004/106878 ein Redsatzlager, das einen Sensor sowohl als eine Rechnereinheit aufweist.

Die Aufgabe der vorliegenden Erfindung besteht somit darin, eine Sensoreinheit für ein Radsatzlager zur Verfügung zu stellen, welche eine aufwandsarme Aufzeichnung der Messdaten und ein einfaches Auslesen der aufgezeichneten Daten erlaubt.

Diese Aufgabe wird gelöst durch die Merkmale des Anspruchs 1.

Ein besonderer Vorteil dieser Erfindung besteht darin, dass eine Wartung des Radsatzlagers abhängig von dessen tatsächlichen Zustand erfolgen kann. Hierzu sind zu Beginn der Wartung die von der Rechnereinheit aufgezeichneten Daten auszulesen. Anhand der aufgezeichneten Daten können Rückschlüsse auf die Laufleistung, den Verschleiß und die Beanspruchung des Radsatzlagers gezogen werden, sodass gezielte Maßnahmen in der Wartung vorgenommen werden können. Beispielsweise deutet ein häufiges Überschreiten einer Grenztemperatur auf ein mögliches bzw. zu erwartendes Heißlaufen des Radsatzlagers hin.

Ein weiterer Vorteil dieser Erfindung besteht darin, dass eine Anpassbarkeit an unterschiedlichste Anforderungen hinsichtlich der Aufzeichnung und Ausgabe von Messdaten in Sensoreinheiten von Radsatzlagern gegeben ist. Die erfinderische Lösung ist auch für künftige Sensoreinheiten von Radsatzlagern anwendbar, da sowohl die Sensoren als auch die verfügbaren Rechnereinheiten dem technologischen Fortschritt angepasst werden können.

Mit Hilfe der Rechnereinheit können Histogramme von Geschwindigkeit. Drehzahl, Temperatur, Feuchtigkeit, Druck, Erschütterungen, Vibrationen, Laufleistung und auch von weiteren Größen, die charakteristisch für den Verschleißzustand und die Betriebsbedingungen des überwachten Radlagers sind, aufzeichnet werden.

Das Über- und Unterschreiten von Grenzwerten kann gesondert gespeichert und ausgegeben werden. Die Ausgabe der Daten kann über eine Schnittstelle während des Betriebes zu einer Diagnoseeinheit des Fahrzeugs oder während der Wartung zu der entsprechenden Wartungstechnik erfolgen.

Vorzugsweise ist die Rechnereinheit durch einen Mikrocontroller gebildet. Mikrocontroller umfassen die für den Betrieb einer Rechnereinheit notwendigen Prozessoren, Speicher, Schnittstellen usw. Mikrocontroller sind auch sehr kostengünstig und für unterschiedlichste Anforderungen verfügbar. Sie sind aufgrund ihrer Bauform in die Sensoreinheiten für Radsatzlager integrierbar. Es können Mikrocontroller mit Standardschnittstellen verwendet werden, wodurch das Auslesen der Daten mit Standardgeräten, z.B. Schnittstellenkarten von Personalcomputern ermöglicht ist. Aufgrund der Miniaturisierung können Mikrocontroller in die Gehäuse bislang üblicher Sensoreinheiten integriert werden. Folglich können die erfindungsgemäßen Sensoreinheiten mechanisch kompatibel zu den bislang üblichen Sensoreinheiten ausgeführt werden, sodass auch ein Austausch an bestehenden Radsatzlagern erfolgen kann.

Die erfindungsgemäßen Sensoreinheiten eignen sich zur Aufnahme unterschiedlicher Sensorarten. Üblich ist die Überwachung der Drehzahl der im Radsatzlager gelagerten Radachse und der Temperatur des Radsatzlagers. Daher ist die erfindungsgemäße Sensoreinheit bevorzugt mit einem Hall-Sensor zur Bestimmung der Drehzahl und einem Temperatursensor auszuführen. Andere Sensoren sind auch einsetzbar, beispielsweise GMR-Sensoren oder AMR-Sensoren.

Die Sensoreinheit kann aber auch weitere Drehzahl- und Temperatursensoren oder auch Sensoren für Erschütterung, Feuchtigkeit und andere Kenngrößen umfassen.

Gemäß der Erfindung die Sensoreinheit über eine Zwei-Drahtschnittstelle elektrisch nach außen verbunden. Über die Zwei-Drahtschnittstelle erfolgt die Spannungsversorgung der Rechnereinheit und der Sensoren, die eine Spannungsversorgung benötigen. Gleichzeitig erfolgt die Ausgabe der Daten der Sensoren und der Rechnereinheit über die Zwei-Draht-Schnittstelle. Folglich wird mit einer solchen Phantomspeisung die Rechnereinheit parasitär gespeist, sodass die erfindungsgemäße Sensoreinheit elektrisch kompatibel zu den bislang üblichen Sensoreinheiten ausgeführt werden kann.

Dies erlaubt einen problemlosen Ersatz bestehender Sensoreinheiten, sodass die Erfindung beispielsweise auch für eine Vielzahl vorhandener Schienenfahrzeuge genutzt werden kann.

Weiterhin wird darauf hingewiesen, dass die erfindungsgemäße Sensoreinheit darüber hinaus entsprechend für beliebige Radlager einsetzbar ist.

Weitere Vorteile, Einzelheiten und Weiterbildungen der Erfindung ergeben sich aus der nachfolgenden Beschreibung einer Ausführungsform, unter Bezugnahme auf die Zeichnung.

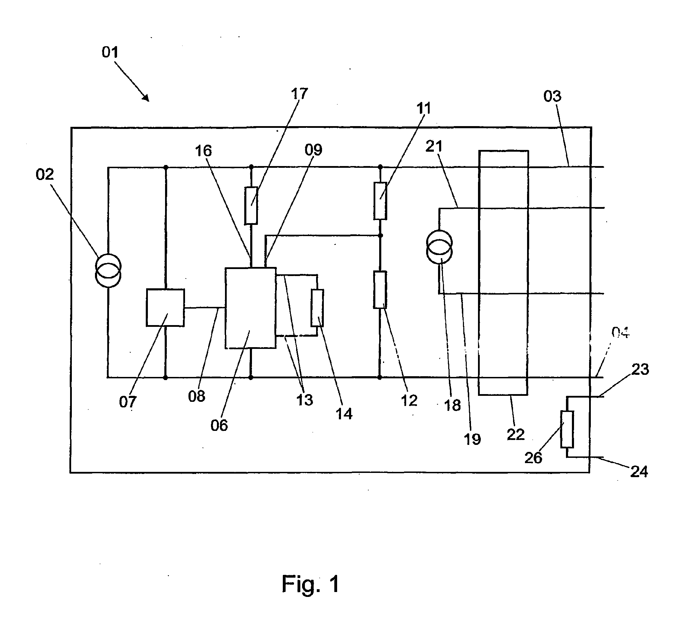

Die einzige Figur (Fig. 1) zeigt ein vereinfachtes Schaltbild einer bevorzugten Ausführungsform einer erfindungsgemäßen Sensoreinheit 01 für ein Radsatzlager eines Schienenfahrzeuges.

Die Sensoreinheit 01 umfasst einen oder mehrere Hall-Sensoren 02 zur Bestimmung der Drehzahl der im Radsatzlager gelagerten Radachse (nicht gezeigt). Der Hall-Sensor 02 wird mittels Phantomspeisung über Leitungen 03, 04 gespeist. Die Ausgangssignale des Hall-Sensors 02 werden ebenfalls über die Leitungen 03, 04 geleitet. Die Kodierung der Daten erfolgt durch zwei Pegel, welche durch einen Stromfluss von 14 mA bzw. 7 mA gekennzeichnet sind. Über die Leitungen 03, 04 wird weiterhin ein Mikrocontroller 06 gespeist. Bei dem Mikrocontroller 06 handelt es sich um einen Typ mit einer sehr geringen Stromaufnahme, sodass dieser gemeinsam mit dem Hall-Sensor 02 über die 7/14-mA-Schnittstelle parasitär gespeist werden kann. Für die Gewährleistung einer korrekten Versorgungsspannung des Mikrocontrollers 06 wird dieser über einen Spannungsregler 07 gespeist. Der Spannungsregler 07 weist eine geringe Verlustleistung auf, sodass die 7/14-mA-Schnittstelle nicht überlastet wird. Der Ausgang des Spannungsreglers 07 ist über einer Leitung 08 mit einem Eingang für die Versorgungsspannung des Mikrocontrollers 06 verbunden. Der Eingang des Mikrocontrollers 06 für das elektrische Massepotenzial ist mit der Leitung 04 verbunden.

Ein Dateneingang 09 des Mikrocontrollers 06 dient dem Einlesen von Daten. Der Dateneingang 09 ist über einen Spannungsteiler mit den zum Hall-Sensor 02 geführten Leitungen 03, 04 verbunden. Der Spannungsteiler ist durch zwei Widerstände 11, 12 gebildet. Der aus den Widerständen 11, 12 gebildete Spannungsteiler ermöglicht eine Umsetzung der Pegel auf der 7/14-mA-Schnittstelle in Pegel, die kompatibel mit dem Dateneingang 09 sind. Auf diese Weise können alle Informationen, die vom Hall-Sensor 02 ausgegeben werden, vom Mikrocontroller 06 aufgenommen werden.

Der Mikrocontroller 06 ist an einem Analogeingang 13 (oder auch intern) mit einem Temperatursensor 14 verbunden. Der Temperatursensor 14 dient der Bestimmung der Temperatur des Radsatzlagers. Der Mikrocontroller 06 zeichnet den Temperaturverlauf auf und erzeugt ein Signal, wenn die zulässige Maximaltemperatur überschritten wird.

Ein Datenausgang 16 des Mikrocontrollers 06 ist über einen Widerstand 17 mit der Leitung 03 verbunden. Auf diese Weise können Daten des Mikrocontrollers 06 über die Leitung 03 ausgegeben werden. Die Leitungen 03, 04 dienen also gleichzeitig der Stromversorgung des Hall-Sensors 02 und des Mikrocontrollers 06 sowie der Datenausgabe des Hall-Sensors 02 und des Mikrocontrollers 06.

Die Sensoreinheit 01 umfasst einen weiteren Drehzahlsensor 18, der über Leitungen 19, 21 abgegriffen wird. Der Drehzahlsensor 18 ist nicht mit dem Mikrocontroller 06 verbunden und dient beispielsweise als Redundanz für den Hall-Sensor 02 während des Betriebes des Radsatzlagers. Bei einer erfindungsgemäßen Sensoreinheit 01 müssen nicht alle Sensoren mit dem Mikrocontroller 06 verbunden sein. Die erfindungsgemäße Sensoreinheit 01 kann auch mit weiteren Sensoren für Drehzahl, Temperatur, Feuchtigkeit, Vibration, Erschütterung usw. ausgeführt sein.

Die Leitungen 03, 04, 19, 21 sind über eine elektrische Schutzschaltung 22 nach außen geführt. Die elektrische Schutzschaltung 22 ist erforderlich, um die empfindlichen Baugruppen, wie den Mikrocontroller 06 und den Hall-Sensor 02 gegen Überspannung u. ä. nach außen zu schützen. Dem Fachmann sind geeignete Schaltungen zum äußeren elektrischen Schutz solcher Baugruppen bekannt

An der Sensoreinheit 01 sind weiterhin zwei Leitungen 23, 24 nach außen geführt, über die ein externer Temperatursensor 26 angeschlossen ist. Der externe Temperatursensor 26 befindet sich nicht unmittelbar in der Sensoreinheit 01, sondern dient beispielsweise der Temperaturbestimmung am Radsatzlager in der Nähe der Sensoreinheit 01.

Die Leitungen 03, 04, 19, 21, 23, 24 sind im eingebauten Zustand der Sensoreinheit 01 und des Radsatzlagers mit der Steuerelektronik des Schienenfahrzeuges verbunden. Das Auslesen der Daten des Mikrocontrollers 06 kann sowohl während des Betriebes des Schienenfahrzeuges als auch während der Wartung erfolgen. Für das Auslesen während der Wartung kann eine Verbindung der Wartungstechnik zur Steuerelektronik des Schienenfahrzeuges geschaffen werden. Insofern das Radsatzlager sich im ausgebauten Zustand befindet oder ein Zugriff auf die Steuerelektronik des Schienenfahrzeuges nicht möglich ist, kann eine Verbindung unmittelbar zur Sensoreinheit 01 geschaffen werden.

### Bezugszeichenliste

- 01: Sensoreinheit
- 02: Hall-Sensor
- 03: Leitung
- 04: Leitung
- 05: -
- 06: Mikrocontroller
- 07: Spannungsregler
- 08: Eingang für Versorgungsspannung
- 09: Dateneingang
- 10: -
- 11: Widerstand
- 12: Widerstand
- 13: Analogeingang
- 14: Temperatursensor
- 15: -
- 16: Datenausgang
- 17: Widerstand
- 18: Drehzahlsensor
- 19: Leitung zum Drehzahlsensor
- 20: -
- 21: Leitung zum Drehzahlsensor
- 22: Schutzschaltung
- 23: Leitung zum externen Temperatursensor
- 24: Leitung zum externen Temperatursensor
- 25: -
- 26: externer bzw. zweiter Temperatursensor

## Patentansprüche

1. Sensoreinheit (01) mit mindestens einem Sensor (02) zur Überwachung einer Kenngröße eines Radsatzlagers, wobei die Sensoreinheit (01) weiterhin eine Rechnereinheit (06) umfasst, und wobei der Sensor (02) mit einem Dateneingang (09) der Rechnereinheit (06) zum Einlesen der vom Sensor gelieferten Daten verbunden ist, **dadurch gekennzeichnet, dass** die Rechnereinheit (06) und mindestens einer der Sensoren (02) über zwei gemeinsame Leitungen (03, 04) spannungsversorgt sind und dass über die beiden Leitungen (03, 04) zur Spannungsversorgung auch die Ausgabe der Daten von der Rechnereinheit (06) und von dem ebenfalls spannungsversorgten Sensor (02) erfolgt.

2. Sensoreinheit (01) nach Anspruch 1, **dadurch gekennzeichnet, dass** die Rechnereinheit durch einen Mikrocontroller (06) gebildet ist, welcher einen nicht flüchtigen Speicher zur Speicherung der vom Sensor eingelesenen Daten umfasst.

3. Sensoreinheit (01) nach Anspruch 1 oder 2, **dadurch gekennzeichnet, dass** der Sensor ein Hall-Sensor (02) zur Bestimmung der Drehzahl einer im Radsatzlager gelagerten Radachse ist.

4. Sensoreinheit (01) nach Anspruch 1 oder 2, **dadurch gekennzeichnet, dass** der Sensor ein Temperatursensor (14) zur Bestimmung der Temperatur des Radsatzlagers ist.

5. Sensoreinheit (01) nach einem der Ansprüche 1 bis 4, **dadurch gekennzeichnet, dass** sie mehrere Sensoren (02, 14) umfasst, die Daten in die Rechnereinheit (06) einspeisen.

6. Sensoreinheit (01) nach Anspruch 1, **dadurch gekennzeichnet, dass** die Pegel der auszugebenden Daten des Sensors (02) und/oder der Rechnereinheit (06) durch unterschiedliche Stromstärken oder Spannungspegel gekennzeichnet sind.

7. Sensoreinheit (01) nach einem der Ansprüche 1 bis 6, **dadurch gekennzeichnet, dass** die Sensoreinheit (01) eine Schutzschaltung (22) zum äußeren elektrischen Schutz der Rechnereinheit (06) und/oder mindestens eines der Sensoren (02, 14) umfasst.

8. Sensoreinheit (01) nach einem der Ansprüche 1 bis 7, **dadurch gekennzeichnet, dass** die Sensoreinheit (01) weitere Sensoren (18, 26) umfasst, deren Anschlüsse aus der Sensoreinheit (01) nach außen geführt sind und die keine Daten an die Rechnereinheit (06) liefern.

9. Radsatzlager eines Schienenfahrzeuges mit einer Sensoreinheit (01) nach einem der Ansprüche 1 bis 8.

## Claims

1. Sensor unit (01) having at least one sensor (02) for monitoring a characteristic variable of a wheel set bearing, wherein the sensor unit (01) also comprises a computer unit (06), and wherein the sensor (02) is connected to a data input (09) of the computer unit (06) for reading in the data supplied by the sensor, **characterized in that** the computer unit (06) and at least one of the sensors (02) are supplied with voltage via two common lines (03, 04), and **in that** the data from the computer unit (06) and from the sensor (02), which is also supplied with voltage, are output via the two lines (03, 04) for supplying voltage.

2. Sensor unit (01) according to Claim 1, **characterized in that** the computer unit is formed by a microcontroller (06) which comprises a nonvolatile memory for storing the data which have been read in by the sensor.

3. Sensor unit (01) according to Claim 1 or 2, **characterized in that** the sensor is a Hall sensor (02) for determining the rotational speed of a wheel axis which is mounted in the wheel set bearing.

4. Sensor unit (01) according to Claim 1 or 2, **characterized in that** the sensor is a temperature sensor (14) for determining the temperature of the wheel set bearing.

5. Sensor unit (01) according to one of Claims 1 to 4, **characterized in that** said sensor unit (01) comprises a plurality of sensors (02, 14) which feed data into the computer unit (06).

6. Sensor unit (01) according to Claim 1, **characterized in that** the levels of the data which are to be output by the sensor (02) and/or by the computer unit (06) are **characterized by** different current strengths or voltage levels.

7. Sensor unit (01) according to one of Claims 1 to 6, **characterized in that** the sensor unit (01) comprises a protection circuit (22) for providing the computer unit (06) and/or at least one of the sensors (02, 14) with external electrical protection.

8. Sensor unit (01) according to one of Claims 1 to 7, **characterized in that** the sensor unit (01) comprises further sensors (18, 26) whose terminals are led outward from the sensor unit (01) and which do not supply any data to the computer unit (06).

9. Wheel set bearing of a rail vehicle having a sensor unit (01) according to one of claims 1 to 8.

## Revendications

1. Unité de détection (01) comprenant au moins un capteur (02) pour surveiller une grandeur caractéristique d'un palier d'essieu monté, l'unité de détection (01) comprenant en outre une unité de calcul (06) et le capteur (02) étant relié avec une entrée de données (09) de l'unité de calcul (06) pour lire les données délivrées par le capteur, **caractérisée en ce que** l'unité de calcul (06) et au moins l'un des capteurs (02) sont alimentés électriquement par le biais de deux lignes communes (03, 04) et **en ce que** la délivrance des données de l'unité de calcul (06) et du capteur (02) lui aussi alimenté électriquement s'effectue également par le biais des deux lignes (03, 04) d'alimentation électrique.

2. Unité de détection (01) selon la revendication 1, **caractérisée en ce que** l'unité de calcul est formée par un microcontrôleur (06) qui comprend une mémoire non volatile pour enregistrer les données lues par le capteur.

3. Unité de détection (01) selon la revendication 1 ou 2, **caractérisée en ce que** le capteur est un capteur à effet Hall (02) destiné à déterminer la vitesse de rotation d'un essieu logé dans le palier d'essieu monté.

4. Unité de détection (01) selon la revendication 1 ou 2, **caractérisée en ce que** le capteur est un capteur de température (14) destiné à déterminer la température du palier d'essieu monté.

5. Unité de détection (01) selon l'une des revendications 1 à 4, **caractérisée en ce qu'**elle comprend plusieurs capteurs (02, 14) qui injectent des données dans l'unité de calcul (06).

6. Unité de détection (01) selon la revendication 1, **caractérisée en ce que** les niveaux des données à délivrer du capteur (02) et/ou de l'unité de calcul (06) sont **caractérisés par** des intensités de courant ou des niveaux de tension différents.

7. Unité de détection (01) selon l'une des revendications 1 à 6, **caractérisée en ce que** l'unité de détection (01) comprend un circuit de protection (22) pour la protection électrique externe de l'unité de calcul (06) et/ou d'au moins l'un des capteurs (02, 14).

8. Unité de détection (01) selon l'une des revendications 1 à 7, **caractérisée en ce que** l'unité de détection (01) comprend des capteurs supplémentaires (18, 26) dont les bornes sont acheminées depuis l'unité de détection (01) vers l'extérieur et qui ne délivrent pas de données à l'unité de calcul (06).

9. Palier d'essieu monté d'un véhicule ferroviaire comprenant une unité de détection (01) selon l'une des revendications 1 à 8.
